# EUROPEAN PATENT APPLICATION

(11) **EP 2 492 875 A2**
(43) Date of publication of application: **29.08.2012**
(21) Application number: 11159471.9
(22) Date of filing: 23.03.2011
(51) Int. Cl.: G07C 9/00, H04W 12/00

(54) **Methods and apparatus to integrate logical and physical access control**

(30) Priority: 28.02.2011 US 36689
(71) Applicant: Research In Motion Limited, Waterloo, ON N2L 3W8 (CA)
(72) Inventor: Rose, Scott Douglas, Waterloo Ontario N2L 3W8 (CA); Moosavi, Vahid, Waterloo Ontario N2L 3W8 (CA); Griffin, Jason Tyler, Waterloo Ontario N2L 3W8 (CA)
(74) Representative: Roberts, Gwilym Vaughan

(57) **Abstract**

Methods and apparatus to control access are described. One example method includes allowing physical access and logic access based on a credential associated with a mobile device, monitoring logical access by the mobile device, and revoking a physical access privilege based on termination of logical access by the mobile device. Other implementations are possible.

## Description

### FIELD OF THE DISCLOSURE

This disclosure relates generally to access control and, more particularly, to methods and apparatus to integrate logical and physical access control.

### BACKGROUND

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### BRIEF DESCRIPTION OF THE DRAWINGS

FIG. 1 is a plan view representation of a building having different areas to which a user may desire physical access using a mobile device that interacts with access control and security systems.

FIG. 2 is a block diagram of an example interaction between a mobile device and an access control system to obtain physical access and logical access to the building of FIG. 1.

FIG. 3 is a block diagram of an example mobile device in accordance with the disclosure.

FIG. 4 is a diagram of a portion of an example mobile device for use in the system of FIG. 1 and FIG. 2.

FIG. 5 is a diagram of an example access control system for use in the system of FIG. 1 and FIG. 2.

FIG. 6 is a flow diagram of an example process that may be carried out by the mobile device of FIG. 1, FIG. 2, FIG. 3, and FIG. 4.

FIG. 7 is a flow diagram of an example process that may be carried out by an access control system of FIG. 1, FIG. 2, and FIG. 5.

FIG. 8 is a flow diagram of an example process that may be carried out to monitor logical access and physical access by the access control system of FIG. 1, FIG. 2, and FIG. 5.

FIG. 9 is a block diagram of example hardware and software that may be used to implement the block diagrams and processes described above.

### DETAILED DESCRIPTION

As described below, close-proximity communication systems, such as radio frequency identification (RFID), near-field communications (NFC), and the like, can be used by a mobile device, such as a smartphone, to interoperate with an access control system to allow or deny physical access by a user to one or more physical locations and/or logical access to one or more logical resources, such as networks. In this manner, the mobile device may be used to obtain physical access and logical access to resources of, for example, a building, a plant, or any other structure or area to which physical access and logical access are restricted based on an access credential or on access credentials. The access credential may be wirelessly transferred to the mobile device using any suitable technique. For example, the access credential may be electronically transferred to the mobile device through a wireless network (e.g., through electronic mail or short message service messages). In another example, the access credential may be passed to the mobile device through close-proximity communication (e.g., NFC, RFID, etc.). Although close-proximity based communication is described in the examples herein, any proximity-based communication may be utilized.

In a further example, the access credential may not be transferred to the mobile device, but may be associated with the mobile device through one or more identifiers of the mobile devise, such as an international mobile equipment identity (IMEI), electronic serial number (ESN), media access control (MAC) address, or the like. In this manner, the credential or credentials are maintained at a location associated with the physical or logical access (e.g., a security or information technology system of a building to which the user desired physical access and logical access) and are associated with the identifier of the mobile device. Thus, when the user of the mobile device desires physical access or logical access, the mobile device provides an identifier to the security or information technology system, which then determines if one or more credentials are stored in association with the identifier.

As described herein, the physical access and logical access systems may interact to facilitate location determination of a person within an area. For example, logical resources (e.g., wireless or wired network connections) may be used to determine that a user is still within a physical area. Likewise, an indication that a user is not accessing logical resources may be used to indicate that the user has left a physical area in which the logical resources were available, which allows physical access and logical access credentials to be revoked or withdrawn from the user, thereby revoking physical access and logical access privileges of the user.

As described herein, a security system or a method carried out by a security system includes allowing physical access and logic access based on a credential associated with a mobile device, monitoring logical access by the mobile device, and revoking a physical access privilege based on termination of logical access by the mobile device. The security system or the method may revoke a logical access privilege based on logical access by the mobile device and determine whether the mobile device is located in a physical area based on the logical access. The determination may be made by monitoring an access point with which the mobile device was previously communicating.

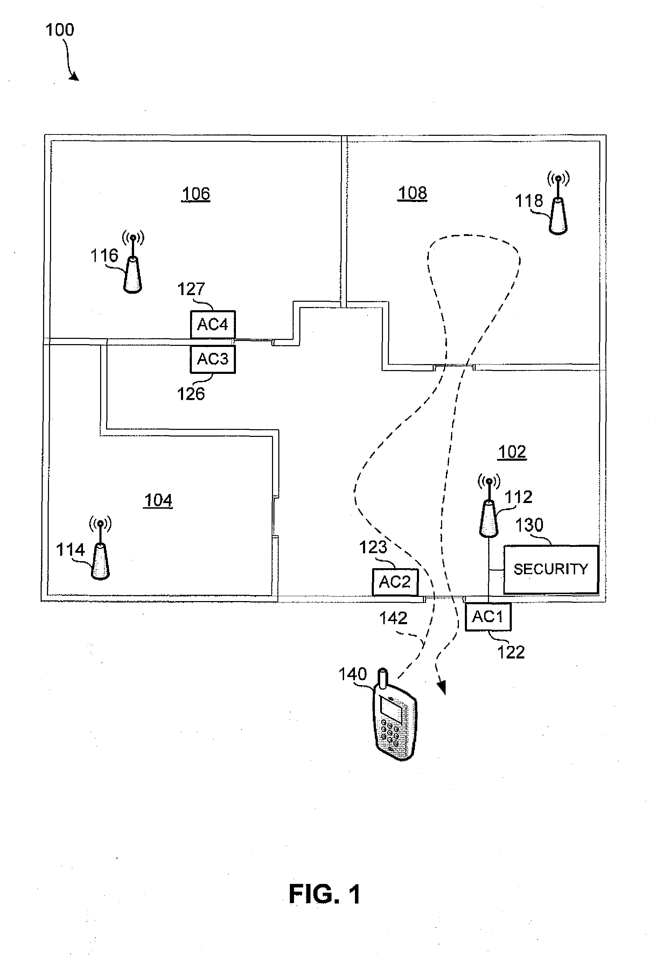

FIG. 1 depicts a building 100 having different areas 102, 104, 106, and 108 to which a user may desire physical access. FIG. 1 also depicts network access points 112, 114, 116, and 118 that are disposed within the building 100. A user, such as a visitor to the building 100, may desire physical access to the areas 102, 104, 106, and 108, and/or logical access to one or more networks through the network access points 112, 114, 116, 118.

In one example, the area 102 may be a lobby or an entrance of the building 100. From the area 102, the areas 104, 106, and 108 may be accessed. Locked doors may be used to prevent unauthorized access to, for example areas 102 and 106. To facilitate access control to the area 102 the locked door is provided with access control systems AC1 and AC2, which are referred to using reference numerals 122 and 123. To facilitate access control to the area 106, the locked door is provided with access control systems AC3 and AC4, which are referred to using reference numerals 126 and 127. In one example, to obtain access to the area 102, a user interacts with the access control system 122. Conversely, when departing the area 102, the user interacts with the access control system 123. Similarly, to obtain access to the area 106, a user interacts with the access control system 126 and, when departing, the user interacts with the access control system 127. In this manner ingress and egress activities of the user may be tracked.

Other doors may or may not be secured with access control systems. In the example of FIG. 1, a security system 130 is coupled to the access point 112 and the access control systems 122 and 123. The access points 114, 116, 118 and the access control systems 126 and 127 may also be coupled to the security system 130. In one example, the access control systems 122 and/or 123 and/or the access control systems 126 and/or 127 may perform the functionality of the security system 130 and, therefore, the separate security system 130 may be eliminated. As described below, the security system 130, the access control systems 122, 123, 126, and 127 and the access points 112, 114, 116, and 118 cooperate to provide physical access and logical access to users (e.g., building visitors).

A user may utilize a mobile device 140, such as a smartphone, a cellular telephone, a tablet computer, or any other suitable device having close-proximity communication functionality, such as NFC, RFID, or any other technology that enables the mobile device 140 to interact with the access control systems 122, 123, 126, and 127. The mobile device 140 is also able to connect to the access points 112, 114, 116, and 118 via a wireless connection, such as an 802.xx wireless connection. Further detail regarding the mobile device 140 and the access control systems 122, 123, 126, and 127 is provided below.

In one example operation, the user of the mobile device 140 desires access to the area 108 by following the path shown by the dotted line 142. In particular, to obtain access to the area 102, the mobile device 140 is placed near the access control system 122, which obtains information from the mobile device 140 through close-proximity communication. The information provided by the mobile device 140 may include an identity of the mobile device 140 or the user of the mobile device 140 and other credentials or identification. Based on the information provided by the mobile device 140, the access control system 122 allows the user to open the door to access area 102. As part of the authorization process, the access control system 122 may write information, such as access authorization information or other information to the mobile device 140 or any other storage area associated with the mobile device 140. The credentials provided to the mobile device 140 may be visitor credentials that are temporary in nature that may be used to obtain physical access and logical access throughout designated areas of the building 100. This process may be referred to as an access process by which the user presents the mobile device 140 and is granted access based on information stored within the mobile device 140. The access process may be similar to a "badge in" process during which personnel present one or more security badges to obtain physical access.

In addition to obtaining physical access to the area 102, the user may desire logical access through the access point 112. For example, a visitor to the building 100 may be granted access to, for example, a wired fidelity (WI-FI) network available from the access point 112. In one example, the WI-FI network may be implemented using 802.xx technology, or any other suitable technology. This grant of logical access may be made when physical access is granted by issuing a password, or key, to the mobile device 140, which allows the mobile device 140 to connect to the access point 112, and any or all of the other access points within the building 100 (e.g., a wired equivalent privacy (WEP) key, a WI-FI protected access (WPA) key, or any other suitable key). In this manner, a visitor is issued credentials for physical access and logical access, wherein such credentials are written to the mobile device 140. The user can then access all physical areas of the building to which he or she is authorized to have access and can also connect to the access points 112, 114, 116, 118. Thus, a user may walk through the area 102 according to the dotted line 142 while having the mobile device 140 connected to the access point 112 and may walk into the area 108, at which point the mobile device 140 may connect to the access point 118.

As the mobile device 140 connects to the access points 112, 114, 116, and/or 118, and/or is granted access by the access control systems 122, 126, the security system 130 tracks these events for later use. The security system 130 may also track when the mobile device 140 has departed an area if the mobile device 140 is presented to the access control systems 123 and/or 127. Thus, the security system 130 may be used to track the whereabouts of a user of the mobile device 140 within the building 100. For example, the security system 130 knows when the mobile device 140 was granted access to the area 102 and when the mobile device 140 connected to the access point 112 and the access point 118. In one particular example, if a visitor is required to go through an access process to obtain physical access and logical access, but is not required to go through a departure process (e.g., a process by which the user presents the mobile device 140 when departing an area, similar to "badging out," wherein a person presents one or more security badges when leaving an area) when leaving the building, the security system 130 may track the whereabouts of the mobile device 140 and determine when a user of the mobile device 140 has departed from the building 100. For example, as explained below, when the mobile device 140 is no longer connected to the access point 112 and is not connected to any other access points 114, 116, 118 (i.e., no longer has logical access), has not requested physical access, and logical access was last made at the access point 112, the security system 130 may determine based on the logical access (or lack thereof) that physical access is no longer occurring. Additionally, triangulation between access points based on access point signal strengths may be used to determine the location of the mobile device and that physical access is no longer occurring. Based on this determination, logical and/or physical access credentials may be revoked for the mobile device 140, which would require the user of the mobile device 140 to again register upon returning to the building 100. In another example, user credentials could be revoked if the mobile device 140 is not connected to any access point for a given period of time. That is, a lack of physical access may be inferred when there is no logical access (e.g., when there is no logical access to any of the access points 112, 114, 116, 118).

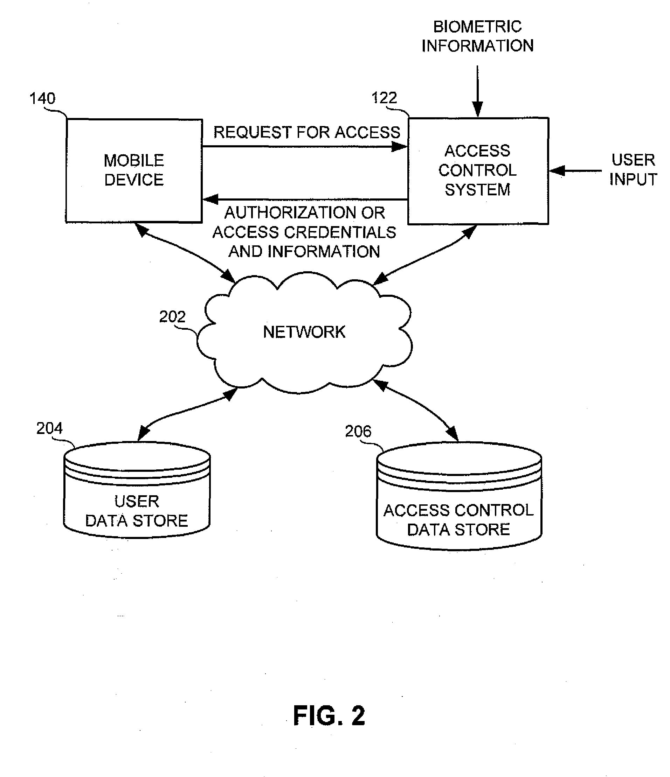

FIG. 2 depicts a block diagram of interaction between the mobile device 140 and the access control system 122. The mobile device 140 and the access control system 122 may each be coupled to a network 202, which may be further coupled to a user data store 204 and an access control data store 206.

The mobile device 140 may comprise a smartphone, a cellular telephone, a tablet computer, a laptop computer, or any other suitable device. The mobile device 140 may exchange information with the access control system 122 using any suitable communication technique. For example, the mobile device 140 may transmit information and/or credentials to the access control system 122 and receive information such as access authorization using, for example, NFC, RFID, Bluetooth, WI-FI, or any other suitable communication technique. The mobile device 140 may store information, such as access history, credentials, authorizations, and the like, of the user of the mobile device 140. Additionally, the mobile device 140 may store information related to individuals that are not the user of the mobile device 140, but are accompanying the user of the mobile device 140. Alternatively, rather than the mobile device 140 storing the information and access history, the mobile device 140 may store one or more links to the information and access history, wherein the information and access history are stored separate from the mobile device 140 and are accessed by the mobile device 140 over the network 202. The information stored in the mobile device 140 may be input to the mobile device 140 through close-proximity communication (e.g., NFC), bar code scanning, manual entry, or by any other suitable method or technique.

The access control system 122, which may include the functionality of the security system 130, may comprise a terminal, a computer, a kiosk, or any suitable configuration that is configured to receive and verify information, which may include access history, from the mobile device 140. The access control system 122 may be portable or may be a fixed installation. The access control system 122 may be operated by, for example, a private security firm or organization, or a government official. The access control system 122 may, for example, display the information received from the mobile device 140 and allow an official, such as, for example, a security official or a police officer, to verify such information while conversing with the user of the mobile device 140. Additionally or alternatively, the access control system 122 may use information from the mobile device 140 as a key to retrieve additional information from an alternate source that may be used to verify the information provided by the mobile device 140. The access control system 122 may also receive biometric information from the user of the mobile device 140 and may use such information to verify the information provided by the mobile device 140 and/or verify the identity of the person currently using the mobile device 140. The verification may also receive user input from, for example, an official, through a user input. The access control system 122 may also store a history of accesses (both physical access and logical access) of the mobile device 140.

The information transferred from the mobile device 140 to the access control system 122 may comprise information such as, access history, credentials, government-issued identification, etc., related to a user of the mobile device 140. The access control system 122 may verify the information provided by the mobile device 140, as well as the identity of the person currently using the mobile device 140, to verify that the user matches the information provided by the mobile device 140.

Information transferred from the access control system 122 to the mobile device 140 may be information that updates the information in the mobile device 140. For example, the information provided to the mobile device 140 from the access control system 122 may be access authorization or credentials (e.g., network access keys, etc.), which may include time stamps, etc. Alternatively, the information may be additional information provided by the access control system 122 to the mobile device 140.

The example interaction between the mobile device 140 and the access control system 122 described above may be different based on prior interactions between the mobile device 140 and the access control system 122. For example, the first time the mobile device 140 interacts with the access control system 122, the mobile device 140 may provide identification information to the access control system 122. In response, the mobile device 140 may receive credentials from the access control system 122. This may occur, for example, when a visitor having the mobile device 140 visits the building 100. Subsequently, after the mobile device 140 has received the credentials, and the credentials are still valid, the mobile device 140 may provide credentials to the access control system 122 or any other access control system within the building 100 and may receive authorization in return from the access control system 122. Thus, while an initial interaction may be based on identity and credentials may be issued to the mobile device 140 based on that identity, subsequent interactions may be based on the issued credentials and the validity of those credentials.

The network 202 may be implemented using the Internet, a local area network (LAN), a wide network (WAN), or any other network. Additionally, the network 202 may be a collection of networks that collectively form the network 202. The network 202 may be a public or a private network.

The user data store 204, which is accessible by the network 202 may be located on a server inside a secure network. The user data store 204 may store personal information, credentials, access history, government-issued information, and the like related to the user of the mobile device 140. In one example, the mobile device 140 may use a secure connection to the user data store 204 to access the information (e.g., personal information, credentials, access history, etc.) of the user. Such a secure connection may be implemented using a virtual private network (VPN) connection, a public/private key system, or the like.

The access control data store 206 may store information related to the user of the mobile device 140, wherein such information is not necessarily accessible by the user. For example, the access control data store 206 may be a private or governmental database that is accessible only by officials so that the information in the access control data store 206 is certified to be accurate and, thus, may be used to verify information provided by the mobile device 140 to the access control system 122. The access control system 122 may access the access control data store 206 through any suitable wired or wireless connection, which may include the use of encryption, VPN(s), public/private keys, or the like.

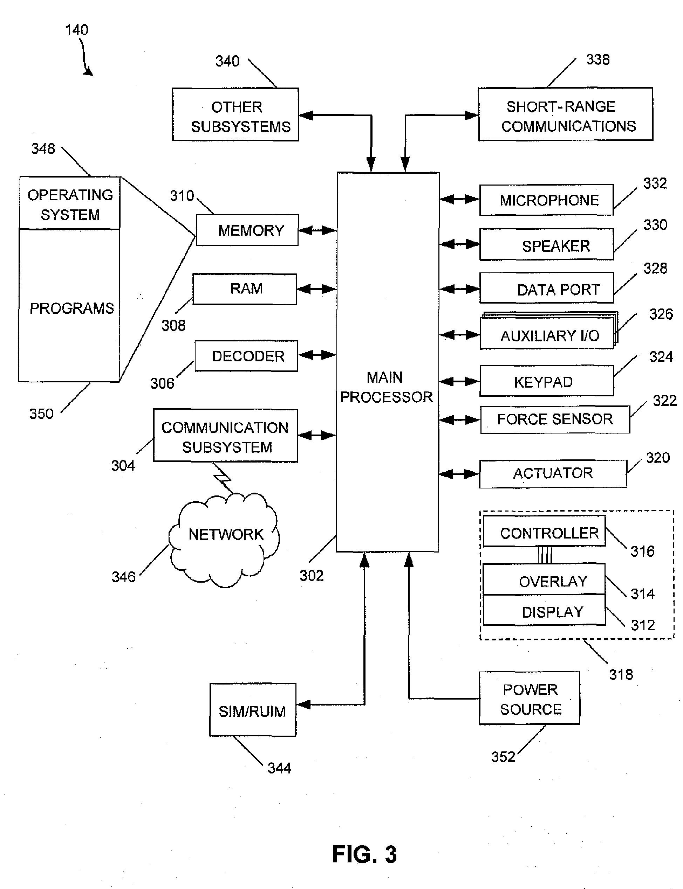

A block diagram of an example mobile device 140 is shown in FIG. 3. The mobile device 140 includes multiple components, such as a processor 302 that controls the overall operation of the mobile device 140. Communication functions, including data and voice communications, are performed through a communication subsystem 304. Data received by the mobile device 140 is decompressed and decrypted by a decoder 306. The communication subsystem 304 receives messages from and sends messages to a wireless network 346. The wireless network 346 may be any type of wireless network, including, but not limited to, data wireless networks, voice wireless networks, and networks that support both voice and data communications. A power source 352, such as one or more rechargeable batteries or a port to an external power supply, powers the mobile device 140.

The processor 302 interacts with other components, such as Random Access Memory (RAM) 308, memory 310, a display 312 with a touch-sensitive overlay 314 operably connected to an electronic controller 316 that together comprise a touch-sensitive display 318, one or more actuator apparatus 320, one or more force sensors 322, a keypad 324, an auxiliary input/output (I/O) subsystem 326, a data port 328, a speaker 330, a microphone 332, short-range communications 338, and other device subsystems 340. User-interaction with a graphical user interface is performed through the touch-sensitive display 318. The processor 302 interacts with the touch-sensitive overlay 314 via the electronic controller 316. Information, such as text, characters, symbols, images, icons, and other items that may be displayed or rendered on the mobile device 140, is displayed on the touch-sensitive display 318 via the processor 302. In some examples, the display 312 may include a primary display and a secondary display.

To identify a subscriber for network access, the mobile device 140 uses a Subscriber Identity Module or a Removable User Identity Module (SIM/RUIM) card 344 for communication with a network, such as the wireless network 346. Alternatively, user identification information may be programmed into memory 310.

The mobile device 140 includes an operating system 348 and software programs or components 350 that are executed by the processor 302 to implement various applications and instructions to carry out processes described herein and are typically stored in a persistent, updatable store such as the memory 310. Additional applications or programs may be loaded onto the portable electronic device 140 through the wireless network 346, the auxiliary I/O subsystem 326, the data port 328, the short-range communications subsystem 338, or any other suitable subsystem 340.

A received signal such as a text message, an e-mail message, or web page download is processed by the communication subsystem 304 and input to the processor 302. The processor 302 processes the received signal for output to the display 312 and/or to the auxiliary I/O subsystem 326. A subscriber may generate data items, for example e-mail messages, which may be transmitted over the wireless network 346 through the communication subsystem 304. For voice communications, the overall operation of the mobile device 140 is similar. The speaker 330 outputs audible information converted from electrical signals, and the microphone 332 converts audible information into electrical signals for processing.

The short-range communications 338 functionality may be NFC, RFID, or any other suitable short-range or close-proximity communication technology. As described herein, the short-range communications 338 may be used to facilitate physical access and logical access by the mobile device 140 in a building or any other suitable venue.

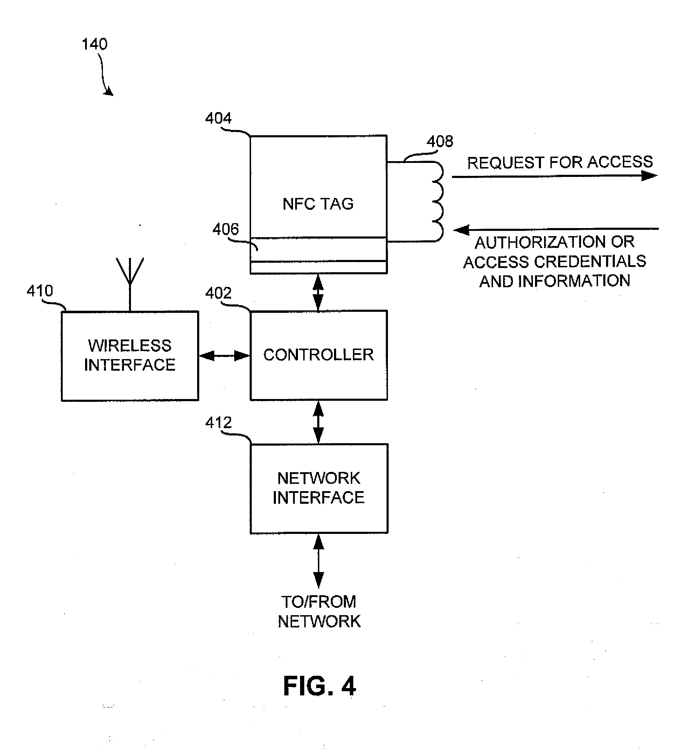

Further detail regarding aspects of the mobile device 140 is shown in FIG. 4, which shows a subset of the hardware and/or software of FIG. 3. The mobile device 140 includes a controller 402 that is connected to a close-proximity communication device which may be a NFC device, such as an NFC tag 404.

The controller 402 may be implemented using any suitable microcontroller or microprocessor capable of executing instructions. Additionally, the controller 402 may include hardware implementations, such as application-specific integrated circuits (ASIC), programmable logic devices (PLDs), or any other suitable logic device or devices.

The NFC tag 404 includes memory 406 and an antenna 408. In one example, the NFC tag 404 is implemented according to the International Standards Organization standard ISO 14443. Implementation according to other standards is possible. The memory 406 may store information related to the user of the mobile device 140, such as personal information, credentials, authorizations, historical information, access history, etc., which may be transferred to the access control system 122 upon the NFC tag 404 being interrogated. Alternatively, rather than information being stored in the memory 406, information may be stored in the access control data store 206 and accessed via the network 202.

In addition, the NFC tag 404 may receive information updates that are provided by the access control system 122. For example, if authorization is granted to the mobile device 140 by the access control system 122, the access control system 122 may provide the NFC tag 404 with an indication of such an event and a timestamp marking the event. Credentials such as network keys may also be provided to the NFC tag 404 and stored in the memory 406 for later use by a wireless interface. Access authorizations that are denials may also be transferred to, and stored in, the NFC tag 404. The information may be stored in the memory 406 of the NFC tag 404 and/or may be transferred to one or more data stores (e.g., the user data store 204) across the network 202.

While the close-proximity communication device is described as being an NFC tag 404, other types of close-proximity communication devices may be utilized instead of, or in addition to, the NFC tag 404. In some examples, the NFC tag 404 of the mobile device 140 may be emulated by a NFC transceiver that is capable of many different modes of communication. For example, the NFC transceiver may emulate an NFC tag, or may operate as an NFC reader/writer, or in a peer-to-peer mode. Accordingly, while this description uses the example of an NFC tag 404, any suitable NFC device may be user. In situations in which the NFC device is a multimode device such as an NFC transceiver, any suitable mode of the NFC transceiver may be used to exchange information. That is, the NFC transceiver may operate in any of tag emulation, reader/writer emulation, and peer-to-peer modes to facilitate the exchange of information,

The NFC tag 404 may store information or may store pointers to information that may be retrieved over the network by the controller 402 via a wireless interface 410 or over a network interface 412. In some examples, all the information may be stored across a network, or the NFC tag 404 may store information and may store pointers to information.

The wireless interface 410 may be implemented using any wireless communication technique that facilitates wireless communication between the mobile device 140 and the access points 112, 114, 116, 118. In one example, network access keys stored in memory 406 may be used by the wireless interface 410 to facilitate such communications. The wireless interface may, in one example, be an 802.xx compatible interface.

The network interface 412 may be implemented using any wired or wireless communication interface. For example, the network interface 412 may be implemented using an Ethernet connection, or any other wired connection. Alternatively, the network interface 412 may be implemented using a WI-FI interface, a cellular modem, which may be a second generation (2G) and/or third generation (3G) and/or fourth generation (4G) cellular modem, or the like, and/or any other wireless network interface. Although shown as having a single network interface 412 the mobile device 140 may include several different network interfaces using one or more different wireless access technologies.

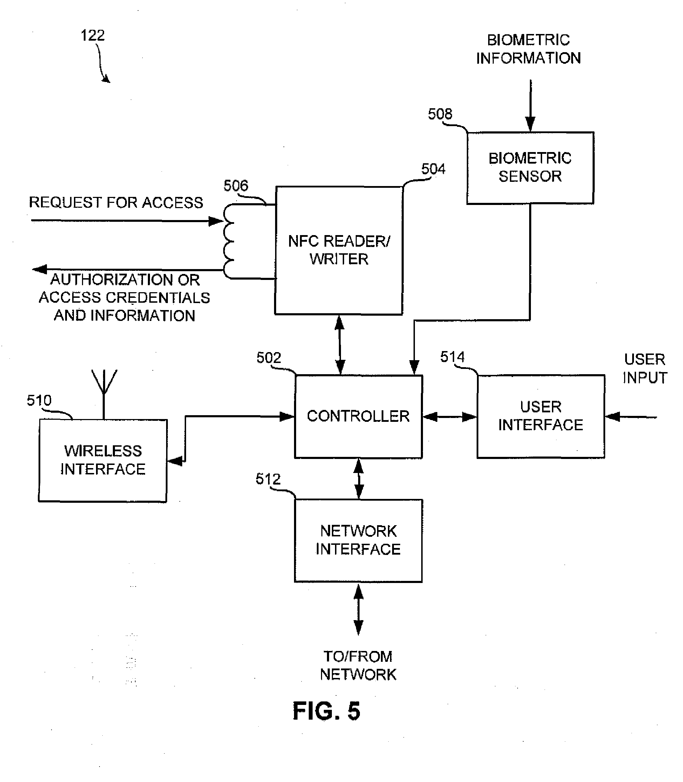

In one example, the access control system 122, which is shown in the example of FIG. 5, includes a controller 502 that is coupled to a close-proximity communication device, such as an NFC reader/writer 504 including an associated antenna 506. The access control system 122 also includes a biometric sensor 508, a wireless interface 510, a network interface 512, and a user interface 514.

The controller 502 may be implemented using any suitable microcontroller or microprocessor capable of executing instructions. Additionally, the controller 502 may include hardware implementations, such as application-specific integrated circuits (ASIC), programmable logic devices (PLDs), or any other suitable logic device or devices.

The NFC reader/writer 504 may be configured to interrogate, send commands and information to, and receive information from the NFC tag 404 of FIG. 4. In one example, the NFC reader/writer 504 is implemented according to the International Standards Organization standard ISO 14443. Implementation according to other standards is possible. In one example, the NFC reader/writer 504 may be configured to interrogate the NFC tag 404 and receive information from the NFC tag 404. As described above, the information received at the NFC reader/writer 504 from the NFC tag 404 may include information such as access history, credentials, etc. Additionally, the NFC reader/writer 504 is configured to send information to the NFC tag 404. As described above, the information may include access authorizations, information, changes to user credentials, history information, such as border crossing history, etc.

While the close-proximity communication device is described as being an NFC reader/writer 504, other types of close-proximity communication devices may be utilized instead of, or in addition to, the NFC reader/writer 504. In some examples, the NFC reader/writer 504 may be emulated by a NFC transceiver that is capable of many different modes of communication. For example, the NFC transceiver may emulate an NFC tag, or may operate as an NFC reader/writer, or in a peer-to-peer mode.

The biometric sensor 508 may be optionally included in the access control system 122 to facilitate the reading of biometric information from a user, such as a user of the mobile device 140. In some examples, the biometric sensor 508 may be a fingerprint reader, a retinal scanner, or any other suitable biometric sensor 508 capable of obtaining biometric information that may be used to verify an identity of the user of the mobile device 140.

The wireless interface 510 may be configured to facilitate wireless communications with, for example, the mobile device 140, or any other suitably equipped device or component. For example, the wireless interface 510 may facilitate information exchange between the mobile device 140 and the access control system 122 (and/or the access points 112, 114, 116, 118), or any suitable wireless network that may be available. In the example of FIG. 5, the wireless interface 510 is shown as part of the NFC reader/writer 504. However, the wireless interface may be implemented in or using any of the access points 112, 114, 116, 118.

The network interface 512 may be implemented using any wired or wireless communication interface. For example, the network interface 512 may be implemented using an Ethernet connection, or any other wired connection. Alternatively, the network interface 512 may be implemented using a WI-FI interface, a cellular modem, which may be a second generation (2G) and/or third generation (3G) cellular modem, or the like, and/or any other wireless network interface. Although shown as having a single network interface 512 the access control system 122 may include several different network interfaces using one or more different wired or wireless access technologies.

The user interface 514 may include hardware and software to allow a user, such as security personnel or any other suitable user, to interface with the controller 502. For example, the user interface 514 may include a display screen and a keyboard and/or any other suitable input device, such as a touch-screen. The user interface 514 allows a user to see information, such as verification information, that is produced by the controller 502. The user interface 514 also allows the user to provide information, such as text or any other suitable input, to the controller 502.

Block diagrams of apparatus and flowcharts representative of example processes that may be executed to implement some or all of the elements and devices described herein are described below and shown in the drawings. In these examples, the process represented by each flowchart may be implemented by one or more programs comprising machine readable instructions for execution by a processor or controller or any suitable hardware, such as shown in FIGS. 1, 2, 3, 4 and/or 5, and/or any other suitable device.

The one or more programs may be embodied in software or software instructions stored on a tangible medium such as, for example, a flash memory, a CD-ROM, a hard drive, a DVD, or a memory associated with a processor, but the entire program or programs and/or portions thereof could alternatively be executed by a device other than the microprocessor and/or embodied in firmware or dedicated hardware (e.g., implemented by an application specific integrated circuit (ASIC), a programmable logic device (PLD), a field programmable logic device (FPLD), discrete logic, etc.). For example, any one, some or all of the example mobile communications system components could be implemented by any combination of software, hardware, and/or firmware. Also, some or all of the processes represented by the flowcharts may be implemented manually. As used herein, the term tangible computer readable medium is expressly defined to include any type of computer readable storage.

Additionally or alternatively, the example processes described herein may be implemented using coded instructions (e.g., computer readable instructions) stored on a non-transitory computer readable medium such as a hard disk drive, a flash memory, a read-only memory, a compact disk, a digital versatile disk, a cache, a random-access memory and/or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium.

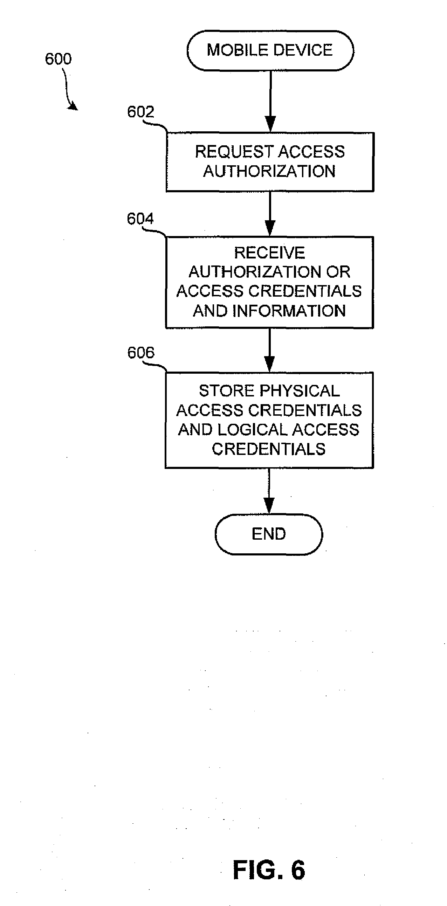

A process 600, as shown in FIG. 6, may be carried out by a mobile device, such as the mobile device 140 of FIG. 1, FIG. 2, FIG. 3, and/or FIG. 4. The mobile device 140 when brought near an access control system, such as the access control system 122, requests access authorization to a physical area, such as the area 102 (block 602). The request for access may include the NFC tag 404 remaining in a low power mode until, for example, an interrogation signal is sent by the NFC reader/writer 504 and received at the NFC tag 404, at which time the NFC tag 404 enters an active power mode and requests access.

The user of the mobile device 140 may provide information, such as identity information or any other suitable information as part of the request (block 602) or subsequent to the request. The mobile device 140 receives authorization or access credentials, such as physical access and logical access credentials (block 604) and stores the credentials (block 606). For example, the credentials may include one or more access keys or access codes that may be used to obtain physical or logical access (e.g., WEP keys or any other wireless access codes). The mobile device 140 stores the access credentials and, optionally, the additional information either in the memory 406 of the NFC tag 404, in the user data store 204, or in any other suitable storage location either local to the mobile device 140, or remote therefrom. The additional information may be retrieved subsequently to provide maps, guidance, emergency information, or any other suitable information useful to the user of the mobile device 140.

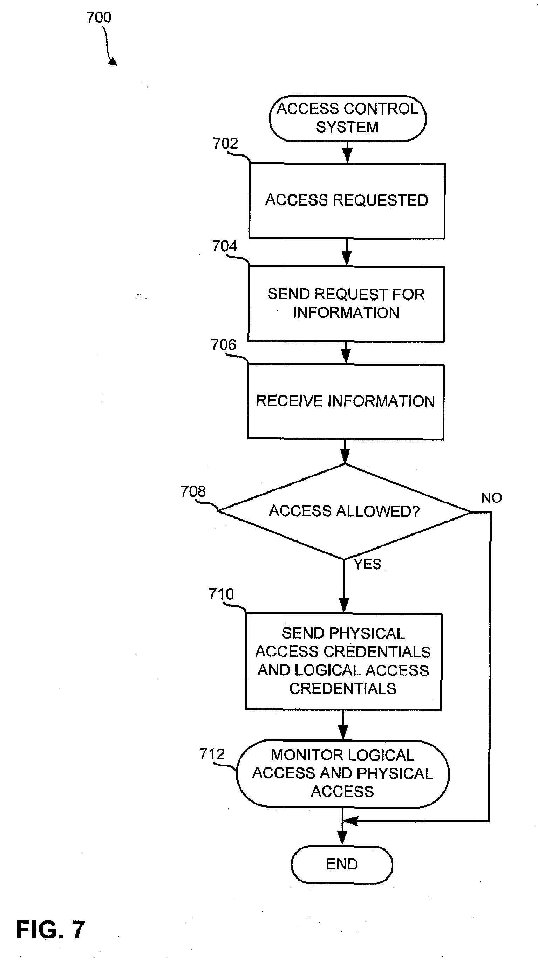

A process 700, as shown in FIG. 7, may be carried out by an access control system, such as the access control system 122 of FIG. 1, FIG. 2, and/or FIG. 5. This functionality could also be performed by the security system 130. The access control system 122 determines that access has been requested by the mobile device 140 (block 702). Determining that access has been requested may include, monitoring for presence of the NFC tag 404, which may include periodically sending interrogation signals or any other suitable signals to which NFC tags, such as the NFC tag 404, respond.

When access is requested (block 702), the access control system 122 sends a request for information to the mobile device 140 (block 704). The request for information may include a request for access history, information that may be used to verify authorization to access the area 110, or any other suitable information. In response to the request (block 704), the requested information is received (block 706). The information may be requested and received via the NFC protocol. Alternatively, the access control system 122 may request identifying information from the mobile device 140 and use that identifying information to obtain information such as access history or any other suitable information from a source other than from the mobile device 140. For example, the access control system 122 may utilize the access control data store 206 to obtain access history or other suitable information related to the mobile device 140.

The access control system 122 then evaluates the information received from the mobile device 140 to ensure that the physical access and/or logical access are allowed (block 708). If access is allowed (block 708), physical access and logical access credentials are provided to the mobile device 140 (block 710). The access credentials may be wirelessly transferred to the mobile device using any suitable technique. For example, the access credentials may be electronically transferred to the mobile device through a wireless network (e.g., through electronic mail or short message service messages). In another example, the access credentials may be passed to the mobile device through close-proximity communication (e.g., NFC, RFID, etc.). As explained above, these credentials may be used to obtain access to an area (e.g., the area 102) and/or to access a network (e.g., the access point 112). If access is not allowed (block 708), the process 700 ends without the mobile device 140 being granted physical or logical access.

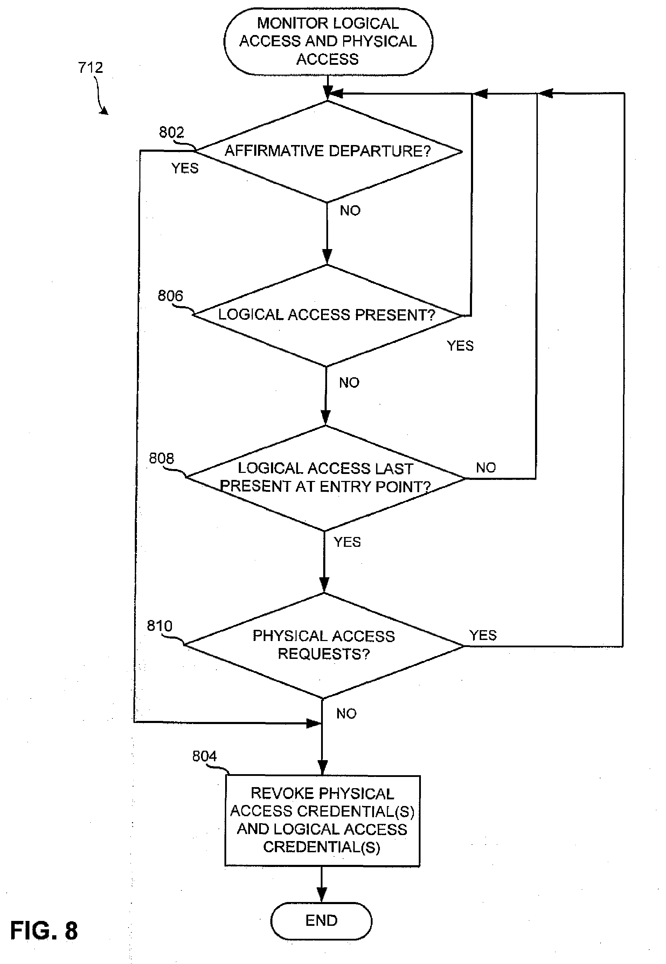

Once the access credentials are sent (block 710), the process 700 monitors logical access and physical access (block 712). As shown in FIG. 8, monitoring logical access and physical access may include determining if there has been an affirmative departure by the user (block 802). That is, the process 712 determines if the user has affirmatively departed using a departure process by scanning the mobile device 140 at an access control system (e.g., the access control system 123) as the user departed the building 100. If a user on temporary access credentials has affirmatively departed (block 802), a logical access credential or credentials and a physical access credential or credentials are revoked (block 804). The revocation may include noting in the access control systems 122 and 126 and/or the security system 130 that the mobile device 140 is no longer allowed physical access as well as logical access.

If, however, there has been no affirmative departure (block 802), the process 712 determines if logical access is present (block 806). That is, the process 712 determines if the mobile device 140 is currently accessing one of the access points 112, 114, 116, or 118. If logical access is present (block 806), the process continues to iterate. Alternatively, if logical access is not present (block 806), the process 712 determines if logical access was last present at the entry point (block 808). For example, it may be determined if the mobile device 140 was last connected to the access point 112.

If logical access was last present at the entry point (block 808), it is determined if there have been physical access requests since the logical presence at the entry point (block 810). That is, the process 800 determines if the mobile device 140 is present within the building, as evidenced by the physical access request, but not connected to one of the access points 112, 114, 116, or 118. If no physical accesses have been requested since the mobile device 140 was last logically connected at the entry point, it may be assumed that the user and the mobile device 140 have left the building 100 and physical access and logical access credentials may be revoked (block 804). In a situation in which the mobile device 140 is within the building and has rebooted and, in the interim, has dropped logical access, the mobile device 140 may reconnect to obtain logical access. Additionally, in such a situation, the mobile device 140 would still be able to obtain physical access, thereby informing the system that the mobile device 140 is present in the building. Alternatively, physical access may be revoked after a period of time during which no logical access is made. The period of time may be selected according to various criteria including security specifications. For example, certain organizations having high security demands may set a period of time for revoking physical access that is relatively shorter than another organization having less stringent security demands.

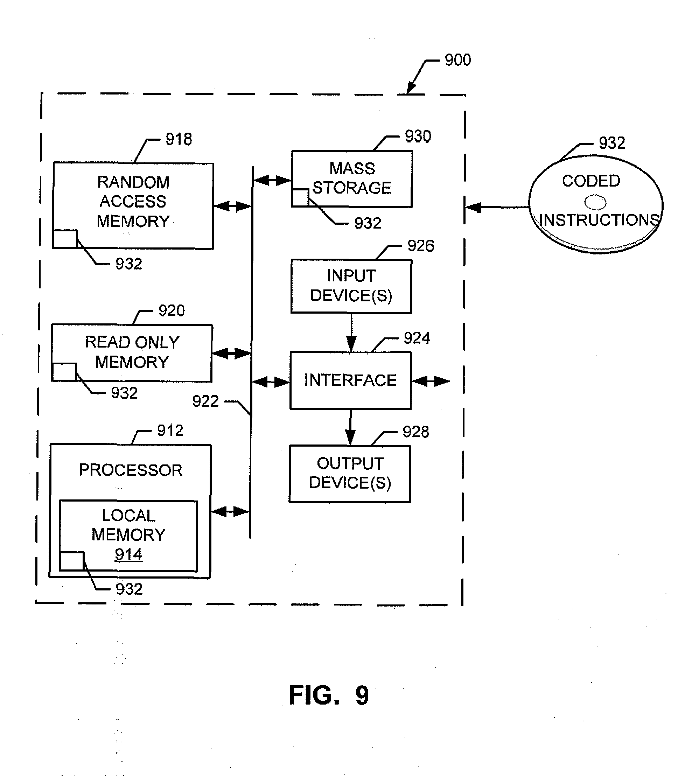

FIG. 9 is a block diagram of an example processing system 900 capable of implementing the apparatus and methods disclosed herein. The processing system 900 can correspond to, for example, a mobile device, an access control system, a security system, or any other type of computing device.

The system 900 of the instant example includes a processor 912 such as a general purpose programmable processor, an embedded processor, a microcontroller, etc. The processor 912 includes a local memory 914, and executes coded instructions 916 present in the local memory 914 and/or in another memory device. The processor 912 may execute, among other things, machine readable instructions to implement any, some or all of the processes represented in FIGS. 5-6. The processor 612 may be any type of processing unit, such as one or more microprocessors, one or more microcontrollers, etc. Of course, other processors from other families are also appropriate.

The processor 912 is in communication with a main memory including a volatile memory 918 and a non-volatile memory 920 via a bus 922. The volatile memory 918 may be implemented by Static Random Access Memory (SRAM), Synchronous Dynamic Random Access Memory (SDRAM), Dynamic Random Access Memory (DRAM), RAMBUS Dynamic Random Access Memory (RDRAM) and/or any other type of random access memory device. The non-volatile memory 920 may be implemented by flash memory and/or any other desired type of memory device. Access to the main memory 918, 920 is typically controlled by a memory controller (not shown).

The system 900 also includes an interface circuit 924. The interface circuit 924 may be implemented by any type of interface standard, such as an Ethernet interface, a universal serial bus (USB), and/or a third generation input/output (3GIO) interface.

One or more input devices 926 are connected to the interface circuit 924. The input device(s) 926 permit a user to enter data and commands into the processor 912. The input device(s) can be implemented by, for example, a keyboard, a mouse, a touchscreen, a track-pad, a trackball, an isopoint and/or a voice recognition system.

One or more output devices 928 are also connected to the interface circuit 924. The output devices 928 can be implemented, for example, by display devices (e.g., a liquid crystal display, a cathode ray tube display (CRT)), by a printer and/or by speakers. The interface circuit 924, thus, typically includes a graphics driver card.

The interface circuit 924 also includes a communication device such as a modem or network interface card to facilitate exchange of data with external computers via a network (e.g., an Ethernet connection, a digital subscriber line (DSL), a telephone line, coaxial cable, a cellular telephone system such as an EGPRS-compliant system, etc.).

The system 900 also includes one or more mass storage devices 930 for storing software and data. Examples of such mass storage devices 930 include floppy disk drives, hard drive disks, compact disk drives and digital versatile disk (DVD) drives.

As an alternative to implementing the methods and/or apparatus described herein in a system such as shown in FIG. 9, the methods and or apparatus described herein may be embedded in a structure such as a processor and/or an ASIC (application specific integrated circuit).

Further, although the example processes are described with reference to flowcharts, many other techniques for implementing the example methods and apparatus described herein may alternatively be used. For example, with reference to the flowcharts, the order of execution of the blocks may be changed, and/or some of the blocks described may be changed, eliminated, combined, and/or subdivided into multiple blocks. Any of the described blocks may be as implemented as part of an existing system. While the example block diagrams are described as implementing the processes of the flowcharts, the apparatus of the block diagrams may implement any process and, likewise, the processes of the flowcharts may be implemented by any apparatus, device, system, software, or combination thereof.

Finally, although certain example methods, apparatus and articles of manufacture have been described herein, the scope of coverage of this disclosure is not limited thereto. On the contrary, this disclosure covers all methods, apparatus and articles of manufacture and equivalents described and claimed herein.

## Claims

1. A method comprising:
allowing physical access and logic access based on a credential associated with a mobile device;
monitoring logical access by the mobile device; and
revoking a physical access privilege based on termination of logical access by the mobile device.

2. The method of claim 1, further comprising revoking a logical access privilege based on logical access by the mobile device.

3. The method of claim 1, further comprising determining whether the mobile device is located in a physical area based on the logical access, and preferably wherein said determining comprises monitoring an access point with which the mobile device was previously communicating.

4. The method of claim 1, further comprising providing a physical access credential and a logical access credential to the mobile device.

5. The method of claim 4, wherein the physical access credential and the logical access credential are provided to the mobile device via proximity-based communications, and preferably wherein the physical access credential and the logical access credential are provided to the mobile device via near-field communications (NFC).

6. The method of claim 4, wherein the physical access credential and the logical access credential are provided to the mobile device via network communications.

7. The method of claim 1, further comprising revoking a physical access privilege and a logical access privilege upon receiving an indication that the mobile device is not located within a designated area.

8. The method of claim 1, further comprising monitoring physical access requests made by the mobile device and maintaining physical access privileges based thereon.

9. A security system, comprising:
a processor;
a memory coupled with the processor, the memory storing machine readable instructions which, when executed by the processor, cause the processor to at least:
allow physical access and logic access based on a credential associated with a mobile device;
monitor logical access by the mobile device; and
revoke a physical access privilege based on termination of logical access by the mobile device.

10. The security system of claim 9, wherein the processor is configured to revoke a logical access privilege based on logical access by the mobile device.

11. The security system of claim 9, wherein the processor is configured to determine whether the mobile device is located in a physical area based on the logical access, and preferably wherein the processor is configured to determine whether the mobile device is located in the physical area by monitoring an access point with which the mobile device was previously communicating.

12. The security system of claim 9, wherein the memory stores machine readable instructions to cause the processor to provide the physical access credential and the logical access credential to the mobile device.

13. The security system of claim 12, wherein the physical access credential and the logical access credential are provided to the mobile device via proximity-based communications, and preferably wherein the physical access credential and the logical access credential are provided to the mobile device via near-field communications (NFC).

14. The security system of claim 9, wherein the memory stores machine readable instructions to cause the processor to revoke a physical access privilege and a logical access privilege upon receiving an indication that the mobile device is not located in a designated area.

15. A machine-readable medium storing instructions that when executed cause a processor to at least:
allow physical access and logic access based on a credential associated with a mobile device;
monitor logical access by the mobile device; and
revoke a physical access privilege based on logical access by the mobile device.
